# EUROPÄISCHE PATENTSCHRIFT

(11) **EP 3 571 909 B1**
(45) Veröffentlichungstag und Bekanntmachung des Hinweises auf die Patenterteilung: **27.01.2021**
(21) Anmeldenummer: 19174841.7
(22) Anmeldetag: 16.05.2019
(51) Int. Cl.: A01B 63/00, A01G 3/04

(54) **HALTEVORRICHTUNG FÜR EINE MASCHINE ZUR PFLANZENBEARBEITUNG UND VERFAHREN ZUM STEUERN SOLCH EINER HALTEVORRICHTUNG**
HOLDING DEVICE FOR A PLANT PROCESSING MACHINE AND METHOD FOR CONTROLLING SUCH A HOLDING DEVICE
DISPOSITIF DE MAINTIEN POUR UNE MACHINE DE TRAITEMENT DE PLANTES ET PROCÉDÉ DE COMMANDE D'UN TEL DISPOSITIF DE MAINTIEN

(30) Priorität: 23.05.2018 DE 102018112365
(43) Veröffentlichungstag der Anmeldung: 27.11.2019
(73) Patentinhaber: ERO GmbH, 55469 Simmern (DE)
(72) Erfinder: Heidberg, Carsten, 56850 Raversbeuren (DE); Günzl, Manfred, 55496 Argenthal (DE); Henn, Dominik, 56843 Lötzbeuren (DE)
(74) Vertreter: Lemcke, Brommer & Partner Patentanwälte Partnerschaft mbB

(56) Entgegenhaltungen:
- EP-A1- 0 898 877
- DE-A1-102010 007 276
- DE-A1-102016 115 934

## Beschreibung

Die Erfindung betrifft eine Haltevorrichtung für eine Maschine zur Pflanzenbearbeitung gemäß Oberbegriff des Anspruchs 1 sowie ein Verfahren zum Steuern einer Haltevorrichtung für eine Maschine zur Pflanzenbearbeitung gemäß Oberbegriff des Anspruchs 9.

Zur Pflanzenbearbeitung ist eine Vielzahl von Maschinen bekannt, welche beispielsweise ein Entlauben, ein Schneiden oder Besprühen der Pflanze ermöglichen. Solche Maschinen finden insbesondere im Obstbau und Weinbau Anwendung. Es ist hierbei häufig notwendig, die Lage der Maschine relativ zum Boden zu ändern, insbesondere, um eine gewünschte Arbeitshöhe zu erzielen.

Es sind daher Haltevorrichtungen für solche Maschinen zur Pflanzenbearbeitung bekannt, welche ein Trägerelement zum Befestigen der Haltevorrichtung an einem Fahrzeug, beispielsweise einem Traktor, aufweisen. An dem Trägerelement ist eine Haltevorrichtung für eine Maschine zur Pflanzenbearbeitung mittels eines hydraulischen Zylinders entlang des Trägerelementes verschiebbar angeordnet. Mittels des hydraulischen Zylinders kann bei senkrecht stehendem Trägerelement die Maschine zur Pflanzenbearbeitung somit nach oben und unten verschoben werden, um eine gewünschte Arbeitshöhe zu erzielen. Solche Haltevorrichtungen sind aus DE102016115934A1 und DE69912671T2 bekannt.

In EP 0 898 877 A1 ist eine Haltevorrichtung mit einem Trägerelement und einem schwenkbar und verschiebbar an dem Trägerelement angeordneten Arm für eine Maschine beschrieben.

Der vorliegenden Erfindung liegt die Aufgabe zugrunde, die Steuermöglichkeiten solcher Haltevorrichtungen zu verbessern.

Gelöst ist diese Aufgabe durch eine Haltevorrichtung gemäß Anspruch 1 sowie durch ein Verfahren zum Steuern einer Haltevorrichtung gemäß Anspruch 9. Vorteilhafte Ausgestaltungen finden sich in den abhängigen Unteransprüchen.

Die erfindungsgemäße Haltevorrichtung ist bevorzugt zur Durchführung des erfindungsgemäßen Verfahrens ausgebildet, insbesondere einer vorteilhaften Ausführungsform hiervon. Das erfindungsgemäße Verfahren ist bevorzugt zur Durchführung mittels der erfindungsgemäßen Haltevorrichtung ausgebildet, insbesondere einer bevorzugten Ausführungsform hiervon.

Die erfindungsgemäße Haltevorrichtung für eine Maschine zur Pflanzenbearbeitung weist ein Trägerelement zur Befestigung der Haltevorrichtung an einem Fahrzeug, insbesondere an einem Traktor, auf sowie ein relativ zu dem Trägerelement verschiebbares Halteelement, zum Anordnen der Maschine an dem Halteelement.

Mittels der Haltevorrichtung kann somit eine Maschine mittelbar an dem Fahrzeug angeordnet werden und durch Verschieben des Halteelementes relativ zu dem Trägerelement ist die Maschine relativ zu dem Fahrzeug verschiebbar.

Wesentlich ist, dass die Haltevorrichtung einen Wegdetektor zur Detektion eines Verschiebeweges des Halteelementes relativ zu dem Trägerelement aufweist. Der Detektor weist zumindest einen ersten und einen zweiten Arm sowie einen Winkeldetektor auf. Der erste Arm ist zumindest mittelbar schwenkbar an dem Trägerelement angeordnet, der zweite Arm ist zumindest mittelbar schwenkbar an dem ersten Arm und zumindest mittelbar schwenkbar an dem Halteelement angeordnet. Der Winkeldetektor ist derart angeordnet, um zumindest mittelbar eine Winkeländerung zwischen den beiden Armen, zwischen dem ersten Arm und dem Halteelement und/oder zwischen dem zweiten Arm und dem Halteelement zu detektieren. Der Winkeldetektor kann hierbei insbesondere an dem Trägerelement, dem ersten Arm, dem zweiten Arm und/oder der Haltevorrichtung angeordnet sein.

Die Erfindung ist in der Erkenntnis des Anmelders begründet, dass die Detektion des Verschiebewegs zwischen Halteelemente und Trägerelement die Steuermöglichkeit einer solchen Haltevorrichtung erheblich verbessert und somit den Bedienungskomfort für den Benutzer und auch die Sicherheit erhöhen kann. Bei bisherigen Haltevorrichtungen wurde die Verschiebung zwischen Halteelement und Trägerelement manuell durch den Benutzer gesteuert und eine Arbeitshöhe manuell durch Sichtkontrolle eingestellt. Insbesondere bei Haltevorrichtungen, deren Trägerelement einen relativ zu dem Fahrzeug verschwenkbaren Mast aufweist, musste bei einem Verschwenken des Mastes bisher die Arbeitshöhe manuell durch Verschieben des Halteelementes relativ zu dem Trägerelement korrigiert werden.

Eine Detektion des Verschiebewegs und/oder eine Änderung des Verschiebewegs bei Verschieben des Halteelements relativ zu dem Trägerelement erweitert die Steuermöglichkeiten für solch eine Haltevorrichtung jedoch erheblich, sodass Benutzungskomfort und Sicherheit erhöht werden können. Untersuchungen des Anmelders zeigen jedoch, dass die Verwendung von linearen Wegdetektoren zur Detektion des Verschiebeweges Nachteile aufweisen. So stellen solche Detektoren in der gewünschten Genauigkeit einen erheblichen Kostenfaktor dar. Darüber hinaus sind solche Detektoren aufgrund des Verschiebevorgangs anfällig für Verschmutzungen oder Beschädigungen.

Die vorliegende Erfindung ist weiterhin auf der Kenntnis begründet, dass mittels dem ersten und zweiten Arm der erfindungsgemäßen Haltevorrichtung über eine Messung zumindest eine Winkeländerung durch den Winkeldetektor eine Bestimmung des Verschiebewegs zwischen Halteelement und Trägerelement möglich ist, wobei auf kostenaufwändige und störanfällige lineare Wegdetektoren verzichtet werden kann:
Der erste Arm ist zumindest mittelbar, d. h. ggf. über weitere Elemente, insbesondere ggf. über weitere schwenkbare Elemente, an dem Trägerelement angeordnet. Der zweite Arm ist zumindest mittelbar schwenkbar an dem ersten Arm und zumindest mittelbar schwenkbar an dem Halteelement angeordnet. Der Winkeldetektor ist derart angeordnet, dass mittels des Winkeldetektors eine Winkeländerung zumindest zwischen einem der nachfolgend genannten Paare erster Arm und Trägerelement; erster Arm und zweiter Arm; zweiter Arm und Halteelement gemessen werden kann.

Bevorzugt sind erster und zweiter Arm derart angeordnet, dass ein Verschieben des Halteelementes relativ zu dem Trägerelement stets Änderungen des Winkels bewirkt, welcher mittels des Winkeldetektors detektierbar ist.

Bevorzugt ist die Haltevorrichtung derart ausgebildet, dass ein Verschieben des Halteelementes relativ zu dem Trägerelement eine Winkeländerung zwischen erstem Arm und Trägerelement, zwischen erstem und zweitem Arm und zwischen zweitem Arm und Halteelement bewirkt.

Insbesondere ist es vorteilhaft, dass der erste Arm unmittelbar schwenkbar an dem Trägerelement, der zweite Arm unmittelbar schwenkbar an dem ersten Arm und der zweite Arm unmittelbar schwenkbar an dem Halteelement angeordnet ist. Vorteilhafterweise ist somit der erste Arm an dem Trägerelement sowie der zweite Arm an dem ersten Arm und dem Halteelement jeweils ohne Zwischenschaltung weiterer schwenkbarer Elemente angeordnet.

Hierdurch ergibt sich ein konstruktiv einfacher Aufbau.

Das Halteelement ist bevorzugt geradlinig verschiebbar an dem Trägerelement angeordnet. Hierdurch ergibt sich ein konstruktiv einfacher Aufbau. Insbesondere kann in einfacher Weise eine Arbeitshöhe durch geradliniges Verschieben des Trägerelementes an dem Halteelement erzielt werden. In einer vorteilhaften Ausführungsform weist das Trägerelement ein Teleskopelement auf und das Halteelement ist an einem ausfahrbaren Bereich, insbesondere einem Endbereich des Teleskopelementes angeordnet, so dass durch ausfahren des Teleskopelementes das Halteelement geradlinig relativ zu dem Trägerelement verschiebbar ist. Ebenso liegt es im Rahmen der Erfindung, das Haltelement entlang des Trägerelementes verschiebbar auszubilden, insbesondere mittels Gleit- und/oder Rollenlagerung.

In einer vorteilhaften Ausführungsform ist an zumindest einem der Arme, bevorzugt an beiden Armen, insbesondere bevorzugt entlang beider Arme zumindest eine Leitung, insbesondere eine elektrische und/oder hydraulische Leitung zwischen Trägerelement und Halteelement geführt.

Diese vorteilhafte Ausgestaltung ist in der Erkenntnis begründet, dass bei Haltevorrichtungen mit verschiebbaren Halteelementen, insbesondere mit geradlinig verschiebbaren Halteelementen typischerweise zumindest eine Leitung, meist eine Mehrzahl von Leitungen wie beispielsweise Hydraulikleitungen und/oder elektrische Leitungen, zu einer an dem Halteelement angeordneten Maschine geführt werden müssen. Bei Bewegen der Maschine mittels Verschieben des Halteelementes relativ zu dem Trägerelement ergibt sich die Aufgabe, mindestens eine Leitung einerseits sicher zu führen und andererseits eine Reibung oder andersartige hohe mechanische Belastung zu vermeiden. Weiterhin soll das Sichtfeld eines Benutzers möglichst gering eingeschränkt werden.

In der zuvor genannten vorteilhaften Ausführungsform wird zumindest eine Leitung an zumindest einem der Arme, bevorzugt an beiden Armen, geführt. Dies weist den Vorteil auf, dass bei einem Verschieben des Halteelementes relativ zu dem Trägerelement zwar eine Winkeländerung zwischen den Armen und Trägerelement und Halteelement erfolgt, jedoch die Gesamtlänge der beiden Arme konstant ist. Eine Leitung, welche von dem Trägerelement entlang des ersten Armes zu dem zweiten Arm und entlang des zweiten Armes zu dem Halteelement geführt wird, muss somit nicht relativ zu den Armen verschoben werden, wenn das Halteelement relativ zu dem Trägerelement verschoben wird. Lediglich an den Punkten, an welchen die Arme schwenkbar aneinander oder an dem Trägerelement bzw. Halteelement gelagert sind, ändert sich der Biegewinkel der Leitung bei Verschieben des Halteelementes relativ zu dem Trägerelement. Eine solche Änderung des Biegewinkels kann jedoch in an sich bekannter Weise durch Biegungsreserven und/oder Biegeführungen hinsichtlich der Belastung der Leitung abgemildert werden, sodass in der beschriebenen bevorzugten Ausführungsform eine stabile, gegenüber äußeren Einflüssen, insbesondere Stößen, unanfällige Führung der Leitung möglich ist.

Bevorzugt wird somit zumindest eine, bevorzugt mehrere Versorgungsleitungen für die Maschine entlang eines Armes, bevorzug entlang beider Arme geführt.

Bevorzugt sind erster und zweiter Arm derart angeordnet, dass bei an dem Fahrzeug angeordnete Haltevorrichtungen die Arme sich in entlang der Fahrtrichtung bei Geradeausfahrt erstrecken. Hierdurch ist das Sichtfeld eines Benutzers durch die Arme sowie durch etwaige an den Armen angeordneten Leitungen nur geringfügig eingeschränkt. Vorteilhafterweise ist die Schwenkachse des ersten Arms zu dem Trägerelement parallel zu der Schwenkachse des ersten Arms zu dem zweiten Arm und parallel zu der Schwenkachse des zweiten Arms zu dem Halteelement. Insbesondere bevorzugt sind die vorgenannten Schwenkachsen derart gewählt, dass bei an dem Fahrzeug angeordnete Haltevorrichtungen bei Geradeausfahrt die Schwenkachsen in etwa quer, insbesondere bevorzugt senkrecht zur Fahrtrichtung liegen, weiter bevorzugt, dass die Schwenkachsen bei auf einer waagerechten Ebene stehendem Fahrzeug waagerecht liegen.

Der Winkeldetektor ist bevorzugt zwischen Trägerelement und erstem Arm angeordnet, um eine Winkeländerung zwischen erstem Arm und Trägerelement zu messen. Hierdurch ergibt sich der Vorteil, dass bei einem Verschieben des Halteelementes relativ zu dem Trägerelement keine Verschiebung des Winkeldetektors erfolgt. Es ergeben sich somit weniger bewegte Teile und darüber hinaus ändert sich ein Zuleitungsweg von Leitungen zu dem Winkeldetektor, insbesondere von Signalleitungen bei Verschieben des Mastelementes relativ zu dem Trägerelement nicht, da bevorzugt die Steuereinheit ortsfest zu dem Trägerelement angeordnet ist, insbesondere ortsfest zu einem Fahrzeug, an welchem das Trägerelement angeordnet ist.

In einer Benutzungskonfiguration ist die Haltevorrichtung an dem Fahrzeug angeordnet, insbesondere an einem Traktor und an der Haltevorrichtung ist an dem Halteelement eine Maschine angeordnet, insbesondere eine Maschine zur Pflanzenbearbeitung.

Vorteilhafterweise ist die Haltevorrichtung derart ausgebildet, dass in Benutzungskonfigurationen die Arbeitshöhe der Maschine mittels Verschieben des Halteelementes relativ zu dem Trägerelement veränderbar ist.

Der Wegdetektor ist vorteilhafterweise derart ausgebildet und angeordnet, dass zwischen der Ortsposition des Halteelementes entlang des Verschiebeweges und der Winkelstellung des Winkeldetektors ein linearer Zusammenhang besteht.

Hierdurch kann in unaufwändiger Weise mittels einer Steuereinheit abhängig von einem Messsignal des Winkeldetektors ein Verschiebeweg und/oder eine Ortsposition des Halteelementes entlang des Verschiebeweges bestimmt werden.

Der Verschiebeweg beträgt bevorzugt zumindest 50 cm, bevorzugt zumindest 70 cm. Vorteilhafterweise liegt der Verschiebeweg im Bereich 30 cm bis 200 cm, bevorzugt 40 cm bis 150 cm.

Insbesondere bei solchen Verschiebewegen erweist sich die vorgenannte vorteilhafte Ausgestaltung als besonders vorteilhaft, bei welcher zumindest eine Leitung entlang der beiden Arme geführt ist.

Vorteilhafterweise weist das Trägerelement eine Fahrzeughalterung zum Anordnen an dem Fahrzeug und ein schwenkbar an der Fahrzeughalterung angeordnetes Mastelement auf. Das Halteelement ist verschiebbar an dem Mastelement angeordnet. Das Trägerelement weist einen Mastwinkeldetektor auf, zum Detektieren eines Kippwinkels zwischen Fahrzeughalterung und Mastelement. In dieser vorteilhaften Ausführungsform ist in Benutzungskonfiguration somit das Mastelement schwenkbar zu der Fahrzeughalterung, wobei der Schwenkwinkel mittels des Mastwinkeldetektors detektierbar ist.

Insbesondere ist das vorteilhaft, dass die Haltevorrichtung derart ausgebildet ist, dass in Benutzungskonfiguration die Schwenkachse zwischen Fahrzeughalterung und Mastelement parallel zur Fahrtrichtung bei Geradeausfahrt ist. Hierdurch kann durch ein Schwenken des Mastes die Maschine an eine Pflanzenzeile, insbesondere eine Weinrebenzeile, angenähert werden oder von der Pflanzenzeile entfernt werden.

Das Halteelement ist bevorzugt ausgebildet, die Maschine relativ zu dem Trägerelement, insbesondere ein Mastelement des Trägerelementes schwenkbar anzuordnen. Weiterhin weist das Halteelement bevorzugt einen Maschinenwinkeldetektor zur Detektion eines Schwenkwinkels zwischen Trägerelement und der an dem Halteelement angeordneten Maschine, insbesondere zwischen einem Mastelement des Trägerelementes und der Maschine auf. In dieser vorteilhaften Ausgestaltung kann die Maschine somit in eine gewünschte Bearbeitungsrichtung gebracht werden, durch Ändern des Schwenkwinkels zwischen Trägerelement und Maschine. Durch den Maschinenwinkeldetektor ist auch dieser Schwenkwinkel detektierbar.

Insbesondere ist es vorteilhaft, dass die Haltevorrichtung eine Steuereinheit aufweist, welche ausgebildet ist, in Benutzungskonfiguration abhängig von den Messdaten des Wegdetektors, des Mastwinkeldetektors und des Maschinenwinkeldetektors Schwenk- und Verschiebebewegungen der Haltevorrichtung derart zu steuern, dass eine geradlinige Bewegung der Maschine, insbesondere eine bei auf einer horizontalen Ebene stehendem Fahrzeug horizontale Bewegung der Maschine zu dem Fahrzeug hin und/oder von dem Fahrzeug weg ausführbar ist. In dieser vorteilhaften Ausführungsform können nun die Messsignale der drei vorbenannten Detektoren Wegdetektor, Mastwinkeldetektor und Maschinenwinkeldetektor verwendet werden, um in für den Benutzer einfacher Weise eine geradlinige Bewegung der Maschine durchzuführen. Insbesondere kann automatisch bei einem Verschwenken des Mastes relativ zu dem Fahrzeug eine durch das Verschwenken bewirkte Höhenänderung kompensiert werden, sodass sich die Arbeitshöhe der Maschine nicht ändert. Zusätzlich kann durch eine Schwenkbewegung in Gegenrichtung zwischen Maschine und Trägerelement die Schwenkbewegung durch Verschwenken des Mastes kompensiert werden, sodass sich nicht nur die Arbeitshöhe der Maschine nicht ändert, sondern auch die Arbeitsrichtung und Orientierung der Maschine relativ zu einer Pflanze unverändert bleibt.

Vorteilhafterweise ist die Steuereinheit derart ausgebildet, dass der Benutzer durch einen einfachen Befehl die Maschine an eine sich neben dem Fahrzeug seitlich befindende Pflanzenreihe annähern oder von dieser entfernen kann, ohne dass sich die Arbeitshöhe und ohne dass sich die Arbeitsrichtung der Maschine ändert.

Die vorliegende Erfindung ist weiterhin durch ein Verfahren zum Steuern einer Haltevorrichtung für eine Maschine zur Pflanzenbearbeitung gelöst, wobei die Maschine ein Trägerelement zur Befestigung der Haltevorrichtung an einem Fahrzeug und ein relativ zu dem Trägerelement verschiebbares Halteelement zum Anordnen der Maschine an dem Halteelement aufweist. Wesentlich ist, dass die Haltevorrichtung abhängig von Messsignalen eines Wegdetektors gesteuert wird, wobei der Wegdetektor zumindest einen ersten und einen zweiten Arm und einen Winkeldetektor aufweist, der erste Arm zumindest mittelbar schwenkbar an dem Trägerelement angeordnet ist, der zweite Arm zumindest mittelbar schwenkbar an dem ersten Arm und zumindest mittelbar schwenkbar an dem Halteelement angeordnet ist und mittels des Winkeldetektors zumindest mittelbar eine Winkeländerung zwischen den beiden Armen, zwischen dem ersten Arm und dem Halteelement und/oder zwischen dem zweiten Arm und dem Halteelement detektiert wird. Hierdurch ergeben sich die eingangs zu der erfindungsgemäßen Vorrichtung genannten Vorteile.

Weitere vorteilhafte Merkmale und Ausführungsformen werden im Folgenden anhand von Ausführungsbeispielen und den Figuren erläutert. Dabei zeigt:
- Figur 1: ein erstes Ausführungsbeispiel einer erfindungsgemäßen Haltevorrichtung in Seitenansicht in einer ersten Arbeitshöhe;
- Figur 2: die Darstellung aus Figur 1 in einer zweiten, demgegenüber größeren Arbeitshöhe;
- Figur 3: die Darstellung aus Figur 1 in Draufsicht von vorne und
- Figur 4: die Darstellung aus Figur 3, wobei eine an der Haltevorrichtung angeordnete Maschine an eine Pflanzenreihe angenähert wurde.

Die Figuren zeigen schematische, nicht maßstabsgetreue Darstellungen. Gleiche Bezugszeichen in den Figuren zeigen gleiche oder gleichwirkende Elemente.

Das Ausgangsbeispiel einer erfindungsgemäßen Haltevorrichtung 1 weist ein Trägerelement 2 und ein relativ zu dem Trägerelement verschiebbares Halteelement 3 auf.

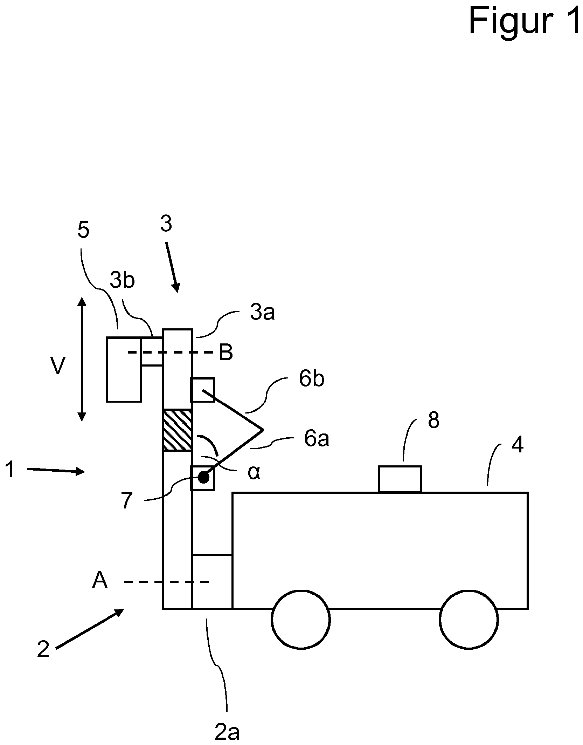

Das Trägerelement 2 ist zur Befestigung an einem Fahrzeug 4, vorliegend einem Traktor, ausgebildet. Das Trägerelement 2 weist eine Fahrzeughalterung 2a sowie ein Mastelement 2b auf. Das Halteelement 3 ist ausgebildet, eine Maschine relativ zu dem Trägerelement 2, insbesondere dem Mastelement 2b schwenkbar anzuordnen. Das Halteelement 3 weist hierzu ein Hauptelement 3a und ein Schwenkelement 3b auf. In Figur 1 ist eine Seitenansicht der Haltevorrichtung 1 in Benutzungskonfiguration dargestellt: Die Haltevorrichtung 1 ist mittels der Fahrzeughalterung 2a an dem Fahrzeug 4 angeordnet. Eine Maschine 5 ist an dem Schwenkelement 3b des Halteelements 3 angeordnet.

Das Mastelement 2b ist vorliegend als Teleskopelement mit einem schraffiert dargestellten teleskopierbaren Bereich ausgebildet, sodass durch Ein- und Ausfahren des Mastelementes 2b das Halteelement 3 in Figur 1 senkrecht nach oben oder nach unten bewegt werden kann. Das Halteelement 2b ist somit geradlinig verschiebbar an dem Mastelement 2b des Trägerelementes 2 angeordnet, wobei in Figur 1 die Verschiebungsrichtung V dargestellt ist.

Die Haltevorrichtung weist einen Wegdetektor zur Detektion des Verschiebewegs des Halteelements 3 relativ zu dem Trägerelement 2 auf: Der Wegdetektor weist einen ersten Arm 6a, einen zweiten Arm 6b und einen Winkeldetektor 7 auf.

Der erste Arm 6a ist unmittelbar, ohne Zwischenschaltung weiterer verschwenkbarer Teile, schwenkbar an dem Mastelement 2b des Trägerelementes 2 sowie an dem zweiten Arm 6b angeordnet. Der zweite Arm 6b ist somit unmittelbar, ohne Zwischenschaltung weiterer verschwenkbarer Elemente, schwenkbar an dem ersten Arm 6a sowie schwenkbar an dem Hauptelement 3a des Halteelementes 3 angeordnet. Der Winkeldetektor 7 ist zwischen Mastelement 2b des Trägerelementes 2 und erstem Arm 6a angeordnet, um einen Winkel α zwischen erstem Arm 6a und Mastelement 2b zu detektieren. Die Haltevorrichtung 1 weist einen Hydraulikzylinder auf, welcher mit einem Hydraulikaggregat des Fahrzeugs 4 verbunden ist, um das Mastelement 2b aus- und einzufahren und somit die Haltevorrichtung 1 nach oben und nach unten zu verschieben.

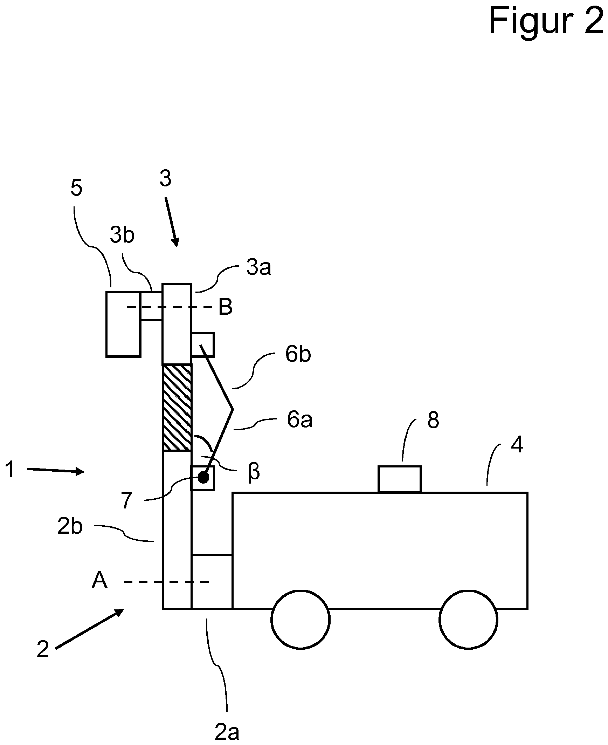

Die Haltevorrichtung 1 weist hierzu eine Steuervorrichtung 8 auf, welche mit dem vorgenannten Hydraulikzylinder und mit dem Winkeldetektor 7 verbunden ist. Die Steuervorrichtung 8 ist ausgebildet, um bei Vorgabe einer Wegstrecke den Hydraulikzylinder derart zu steuern, dass sich die Arbeitshöhe der Maschine 5 und die vorgegebene Wegstrecke ändert. Wird beispielsweise eine gegenüber der Darstellung in Figur 1 größere Arbeitshöhe vorgegeben, so steuert die Steuervorrichtung 8 den Hydraulikzylinder derart, dass das Mastelement 2b ausgefahren wird. Dies ist in Figur 2 dargestellt.

Figur 2 zeigt die Ansicht gemäß Figur 1 gegenüber Figur 1 mittels des Hydraulikzylinders ausgefahrenen teleskopischen Mastelement 2b. Wie deutlich sichtbar, ist der Winkel β zwischen erstem Arm 6a und Mastelement 2b kleiner gegenüber der niedrigeren Arbeitshöhe gemäß Figur 1.

Aus den Messsignalen des Winkeldetektors berechnet die Steuervorrichtung 8 die jeweilige Arbeitshöhe und kann somit die tatsächliche Arbeitshöhe mit der vorgegebenen Soll-Arbeitshöhe vergleichen, um eine Steuerung derart durchzuführen, dass die Maschine 5 in die gewünschte Arbeitshöhe gefahren wird.

Die Maschine 5 stellt eine Schneidevorrichtung für Weinrebezeilen dar, die lediglich schematisch als Block dargestellt ist. Typischerweise weisen solche Schneidvorrichtungen einen länglichen Aufbau mit mehreren übereinander angeordneten rotierenden Messern auf, welche hydraulisch angetrieben werden. Hierzu werden von der Hydraulikeinheit des Fahrzeugs 4 Hydraulikleitungen über das Mastelement 2b zu dem dem Mastelement 2b zugewandten Ende des ersten Armes 6a, entlang des ersten Armes zu dem zweiten Arm, entlang des zweiten Armes zu dem dem Hauptelement 3a zugewandten Ende des zweiten Armes, entlang des Hauptelementes 3a zu dem Schwenkelement 3b und schließlich zur Maschine 5 geführt.

Wie ein Vergleich der Figuren 1 und 2 zeigt, ändert sich die Gesamtlänge dieser Wegstrecke nicht, lediglich die Biegung der Hydraulikleitungen an den Übergängen zwischen Mastelement 2b und erstem Arm, erstem Arm und zweitem Arm sowie zweitem Arm und Hauptelement 3a ändert sich.

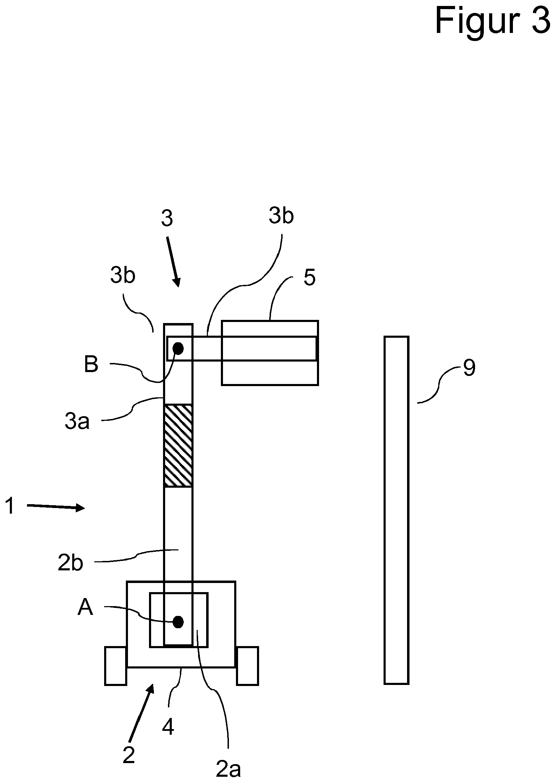

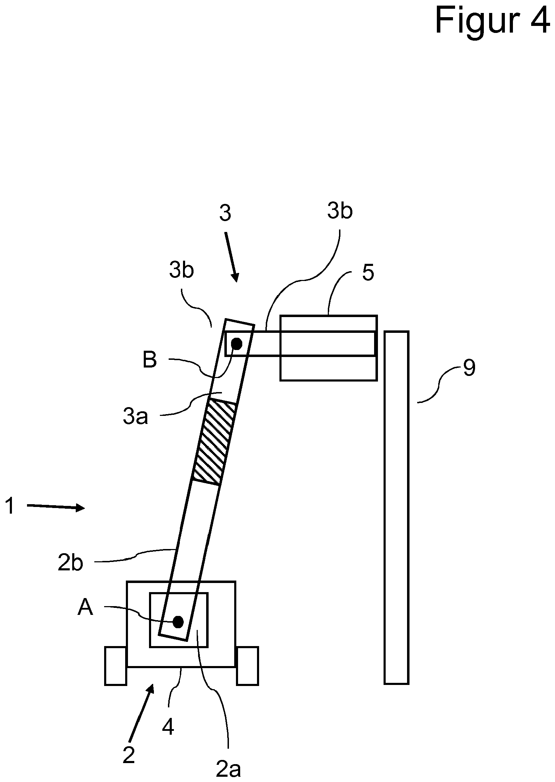

Die Haltevorrichtung weist weitere Hydraulikzylinder auf, um das Mastelement 2b relativ zu der Fahrzeughalterung 2a um eine Achse A zu verschwenken und weitere Hydraulikzylinder, um das Schwenkelement 3b um eine Achse B relativ zu dem Hauptelement 3a zu schwenken. Die Schwenkachsen zwischen erstem Arm und zweitem Arm, erstem Arm und Mastelement sowie zweitem Arm und Hauptelement sind parallel und stehen senkrecht zu einer Fahrtrichtung des Fahrzeugs 4 bei Geradeausfahrt. In den Figuren 1 und 2 stehen diese Drehachsen somit senkrecht zur Zeichenebene, in den Figuren 3 und 4 liegen diese Achsen parallel zur Zeichenebene.

Entsprechend erstrecken sich erster und zweiter Arm mit ihrer Längserstreckung in einer Ebene, die parallel zur Fahrtrichtung bei Geradeausfahrt liegt. Entsprechend ist das Sichtfeld des Benutzers durch den ersten Arm 6a und den zweiten Arm 6b sowie die daran geführten Leitungen nur geringfügig eingeschränkt, wie insbesondere in den Figuren 3 und 4, welche eine Draufsicht von vorne zeigen, ersichtlich.

Die Wegmessung des Verschiebewegs zwischen Halteelement 3 und Trägerelement 2 ermöglicht jedoch nicht nur die Vorgabe einer gewünschten Arbeitshöhe, ebenso ist ein kartesisches Verfahren der Maschine 5 automatisiert möglich. Insbesondere kann die Maschine 5 einer Weinrebenzeile angenähert werden, wobei eine Steuerung automatisiert derart erfolgt, dass sich die Arbeitshöhe der Maschine 5 nicht ändert. Dies wird nachfolgend an den Figuren 3 und 4 erläutert:
In Figur 3 ist die Darstellung gemäß Figur 1 in Draufsicht von vorne gezeigt. Die Schwenkachsen A und B von Mastelement und Schwenkelement stehen somit senkrecht zur Zeichenebene.

Neben dem Fahrzeug 4 befindet sich eine Weinrebenzeile 9. Der Benutzer gibt nun einen Steuerbefehl, beispielsweise "Annähern" oder "Joystick links" mittels der Steuervorrichtung 8 vor, um die Maschine 5 durch ein Schwenken des Mastelementes 2b relativ zur Fahrzeughalterung 2a und somit auch relativ zu dem Fahrzeug 4 an die Weinrebenzeile 9 anzunähern. Die Trägervorrichtung weist zusätzlich einen Mastwinkeldetektor auf, welcher an der Schwenkachse A zwischen Fahrzeughalterung 2a und Mastelement 2b angeordnet ist. Weiterhin weist die Vorrichtung einen Maschinenwinkeldetektor auf, welcher an der Schwenkachse B zwischen Schwenkelement 3B und Hauptelement 3A angeordnet ist. Auch diese Detektoren sind mit der Steuervorrichtung 8 verbunden.

Auf den vorgenannten Steuerbefehl des Benutzers hin schwenkt die Steuervorrichtung 8 das Mastelement 2b relativ zur Fahrzeughalterung in der Ansicht gemäß Figur 3 im Uhrzeigersinn. Gleichzeitig schwenkt die Steuervorrichtung 8 das Schwenkelement 3b relativ zu dem Hauptelement 3a gegen den Uhrzeigersinn, sodass die Drehbewegung kompensiert wird und das Schwenkelement 3b in einer waagerechten Stellung verbleibt. Dies ist mittels einer Regelung möglich, da die jeweiligen Winkelstellungen mittels Mastwinkeldetektor und Maschinenwinkeldetektor durch die Steuervorrichtung 8 bestimmt werden können. Die Schwenkbewegungen werden durch die zuvor genannten hydraulischen Zylinder mittels Steuerung durch die Steuervorrichtungen ausgeführt.

Durch die vorgenannte Bewegung würde sich jedoch die Arbeitshöhe der Maschine 5 ändern. Die Steuervorrichtung 8 ist daher zusätzlich ausgebildet, einen Höhenunterschied der Maschine 5 bei Schwenken des Mastelementes 2b relativ zu der Fahrzeughalterung 2a und entsprechender Gegenbewegung des Schwenkelementes 3b zu dem Hauptelement 3a, wie zuvor beschrieben, zu kompensieren, indem vorliegend das Mastelement 2b ausgefahren wird, d. h. eine Verschiebebewegung des Hauptelementes 3a von der Fahrzeughalterung 2a weg erfolgt. Die Strecke des Verschiebewegs wird derart gewählt, dass in der Endstellung gemäß Figur 4 die Maschine 5 an die Weinrebenzeile 9 angenähert ist, jedoch sich in unveränderter Arbeitshöhe wie auch in Figur 3 befindet.

### Bezugszeichenliste

- 1: Haltevorrichtung
- 2: Trägerelement
- 2a: Fahrzeughalterung
- 2b: Mastelement
- 3: Halteelement
- 3a: Hauptelement
- 3b: Schwenkelement
- 4: Fahrzeug
- 5: Maschine
- 6a: erster Arm
- 6b: zweiter Arm
- 7: Winkeldetektor
- 8: Steuervorrichtung
- 9: Weinrebenzeile

## Patentansprüche

1. Haltevorrichtung (1) für eine Maschine (5) zur Pflanzenbearbeitung, mit einem Trägerelement (2), zur Befestigung der Haltevorrichtung (1) an einem Fahrzeug (4) und
einem relativ zu dem Trägerelement (2) verschiebbaren Halteelement (3), zum Anordnen der Maschine (5) an dem Halteelement (3),
**dadurch gekennzeichnet,**
**dass** die Haltevorrichtung (1) einen Wegdetektor zu Detektion eines Verschiebeweges des Halteelements relativ zu dem Trägerelement (2) aufweist, wobei der Wegdetektor zumindest einen ersten und einen zweiten Arm (6a, 6b) und einen Winkeldetektor (7) aufweist, der erste Arm (6a) zumindest mittelbar schwenkbar an dem Trägerelement (2) angeordnet ist, der zweite (6b) Arm zumindest mittelbar schwenkbar an dem ersten Arm und zumindest mittelbar schwenkbar an dem Halteelement (3) angeordnet ist und
der Winkeldetektor (7) derart angeordnet ist, um zumindest mittelbar eine Winkeländerung zwischen den beiden Armen (6a, 6b), zwischen dem ersten Arm (6a) und dem Trägerelement (2) und/oder zwischen dem zweiten (6b) Arm und dem Halteelement (3) zu detektieren.

2. Haltevorrichtung (1) nach Anspruch 1,
**dadurch gekennzeichnet,**
**dass** an zumindest einem der Arme, bevorzugt an beiden Armen, insbesondere bevorzugt entlang beider Arme zumindest eine Leitung, insbesondere eine elektrische und/oder hydraulische Leitung zwischen Trägerelement (2) und Halteelement (3) geführt ist.

3. Haltevorrichtung (1) nach einem der vorangegangenen Ansprüche,
**dadurch gekennzeichnet,**
**dass** das Halteelement (3) geradlinig verschiebbar an dem Trägerelement (2) angeordnet ist.

4. Haltevorrichtung (1) nach einem der vorangegangenen Ansprüche,
**dadurch gekennzeichnet,**
**dass** der erste Arm an dem Trägerelement (2) sowie der zweite Arm an dem ersten Arm und dem Halteelement (3) jeweils ohne Zwischenschaltung weiterer schwenkbarer Elemente angeordnet ist.

5. Haltevorrichtung (1) nach einem der vorangegangenen Ansprüche,
**dadurch gekennzeichnet,**
**dass** der Winkeldetektor (7) zwischen Trägerelement (2) und erstem Arm angeordnet ist, um eine Winkeländerung zwischen erstem Arm Trägerelement (2) zu messen.

6. Haltevorrichtung (1) nach einem der vorangegangenen Ansprüche,
**dadurch gekennzeichnet,**
**dass** der Wegdetektor derart ausgebildet und angeordnet ist, zwischen der Ortsposition des Halteelementes entlang des Verschiebeweges und der Winkelstellung des Winkeldetektors ein linearer Zusammenhang besteht.

7. Haltevorrichtung (1) nach einem der vorangegangenen Ansprüche,
**dadurch gekennzeichnet,**
**dass** der Verschiebeweg zumindest 50 cm, bevorzugt zumindest Hub 70 cm beträgt und/oder dass der Verschiebeweg im Bereich 30 cm bis 200 cm, bevorzugt 40 cm bis 150 cm liegt.

8. Haltevorrichtung (1) nach einem der vorangegangenen Ansprüche,
**dadurch gekennzeichnet,**
**dass** das Trägerelement (2) eine Fahrzeughalterung (2a) zum Anordnen an dem Fahrzeug (4) und ein schwenkbar an der Fahrzeughalterung (2a) angeordnetes Mastelement (2b) aufweisen, wobei das Halteelement (3) verschiebbar an dem Mastelement (2b) angeordnet ist und dass das Trägerelement (2) einen Mastwinkeldetektor aufweist, zum Detektieren eines Schwenkwinkels zwischen Fahrzeughalterung (2a) und Mastelement (2b).

9. Verfahren zum Steuern einer Haltevorrichtung (1) für eine Maschine (5) zur Pflanzenbearbeitung, mit einem Trägerelement (2), zur Befestigung der Haltevorrichtung (1) an einem Fahrzeug (4) und einem relativ zu dem Trägerelement (2) verschiebbaren Halteelement (3), zum Anordnen der Maschine (5) an dem Halteelement (3),
**dadurch gekennzeichnet,**
**dass** die Haltevorrichtung (1) abhängig von Messsignalen eines Wegdetektors gesteuert wird, wobei der Wegdetektor zumindest einen ersten und einen zweiten Arm (6a, 6b) und einen Winkeldetektor (7) aufweist, der erste Arm (6a) zumindest mittelbar schwenkbar an dem Trägerelement (2) angeordnet ist, der zweite Arm (6b) zumindest mittelbar schwenkbar an dem ersten Arm (6a) und zumindest mittelbar schwenkbar an dem Halteelement (3) angeordnet ist und
mittels des Winkeldetektors (7) zumindest mittelbar eine Winkeländerung zwischen den beiden Armen (6a, 6b), zwischen dem ersten Arm (6a) und dem Halteelement (3) und/oder zwischen dem zweiten Arm (6b) und dem Halteelement (3) detektiert wird.

## Claims

1. Holding device (1) for a machine (5) for processing plants, having
a carrier element (2) for attachment of the holding device (1) to a vehicle (4) and
a holding element (3), which is displaceable relative to the carrier element (2), for arrangement of the machine (5) on the holding element (3),
**characterised in that**
the holding device (1) has a displacement detector for detection of a displacement path of the holding element relative to the carrier element (2), wherein the displacement detector has at least a first and a second arm (6a, 6b) and an angle detector (7), the first arm (6a) is at least indirectly pivotally arranged on the carrier element (2), the second arm (6b) is at least indirectly pivotally arranged on the first arm and at least indirectly pivotally arranged on the holding element (3) and
the angle detector (7) is arranged so as to at least indirectly detect a change in angle between the two arms (6a, 6b), between the first arm (6a) and the carrier element (2) and/or between the second arm (6b) and the holding element (3).

2. Holding device (1) according to claim 1,
**characterised in that**
at least one line, especially an electrical and/or hydraulic line between the carrier element (2) and the holding element (3), is guided on at least one of the arms, preferably on both arms, especially preferably along both arms.

3. Holding device (1) according to either one of the preceding claims,
**characterised in that**
the holding element (3) is arranged on the carrier element (2) so as to be displaceable in a straight line.

4. Holding device (1) according to any one of the preceding claims,
**characterised in that**
the first arm is arranged on the carrier element (2) and the second arm is arranged on the first arm and the holding element (3), in each case without interposition of further pivotable elements.

5. Holding device (1) according to any one of the preceding claims,
**characterised in that**
the angle detector (7) is arranged between the carrier element (2) and the first arm in order to measure a change in angle between the first arm and the carrier element (2).

6. Holding device (1) according to any one of the preceding claims,
**characterised in that**
the displacement detector is configured and arranged in such a way that there is a linear relationship between the local position of the holding element along the displacement path and the angular position of the angle detector.

7. Holding device (1) according to any one of the preceding claims,
**characterised in that**
the displacement path is at least 50 cm, preferably a stroke of at least 70 cm, and/or the displacement path is in the range of from 30 cm to 200 cm, preferably from 40 cm to 150 cm.

8. Holding device (1) according to any one of the preceding claims,
**characterised in that**
the carrier element (2) has a vehicle mounting (2a) for arrangement on the vehicle (4) and a mast element (2b) pivotally arranged on the vehicle mounting (2a), the holding element (3) being displaceably arranged on the mast element (2b); and the carrier element (2) has a mast angle detector for detecting a pivot angle between the vehicle mounting (2a) and the mast element (2b).

9. Method for controlling a holding device (1) for a machine (5) for processing plants, having a carrier element (2) for attachment of the holding device (1) to a vehicle (4) and a holding element (3), which is displaceable relative to the carrier element (2), for arrangement of the machine (5) on the holding element (3),
**characterised in that**
the holding device (1) is controlled in dependence upon measurement signals of a displacement detector, wherein the displacement detector has at least a first and a second arm (6a, 6b) and an angle detector (7), the first arm (6a) is at least indirectly pivotally arranged on the carrier element (2), the second arm (6b) is at least indirectly pivotally arranged on the first arm (6a) and at least indirectly pivotally arranged on the holding element (3) and
a change in angle between the two arms (6a, 6b), between the first arm (6a) and the holding element (3) and/or between the second arm (6b) and the holding element (3) is at least indirectly detected by means of the angle detector (7).

## Revendications

1. Dispositif de maintien (1) dévolu à une machine (5) de traitement de plantes, comprenant un élément de support (2) dédié à la fixation dudit dispositif de maintien (1) à un véhicule (4) et
un élément de retenue (3) pouvant être déplacé par rapport audit élément de support (2), en vue de positionner la machine (5) sur ledit élément de retenue (3),
**caractérisé par le fait**
**que** ledit dispositif de maintien (1) est muni d'un détecteur de courses affecté à la détection d'une course de déplacement de l'élément de retenue par rapport à l'élément de support (2), sachant que ledit détecteur de courses comporte au moins des premier et second bras (6a, 6b) et un capteur angulaire (7), que le premier bras (6a) est agencé sur ledit élément de support (2) avec faculté de pivotement au moins indirect, et que le second bras (6b) est agencé sur ledit premier bras avec faculté de pivotement au moins indirect, et sur ledit élément de retenue (3) avec faculté de pivotement au moins indirect ; et
**que** ledit capteur angulaire (7) est agencé de manière à détecter, au moins indirectement, une variation angulaire entre les deux bras (6a, 6b), entre le premier bras (6a) et l'élément de support (2), et/ou entre le second bras (6b) et l'élément de retenue (3).

2. Dispositif de maintien (1) selon la revendication 1,
**caractérisé par le fait**
**qu'**au moins un conducteur ou conduit, notamment un conducteur électrique et/ou un conduit hydraulique, est (sont) guidé(s) entre l'élément de support (2) et l'élément de retenue (3) au moins sur l'un des bras, de préférence sur les deux bras, le long des deux bras avec préférence particulière.

3. Dispositif de maintien (1) selon l'une des revendications précédentes,
**caractérisé par le fait**
**que** l'élément de retenue (3) est agencé sur l'élément de support (2) avec faculté de déplacement rectiligne.

4. Dispositif de maintien (1) selon l'une des revendications précédentes,
**caractérisé par le fait**
**que** le premier bras est implanté sur l'élément de support (2), de même que le second bras est implanté sur ledit premier bras et sur l'élément de retenue (3), à chaque fois sans interposition d'éléments pivotants supplémentaires.

5. Dispositif de maintien (1) selon l'une des revendications précédentes,
**caractérisé par le fait**
**que** le capteur angulaire (7) est interposé entre l'élément de support (2) et le premier bras, afin de mesurer une variation angulaire entre ledit premier bras et ledit élément de support (2).

6. Dispositif de maintien (1) selon l'une des revendications précédentes,
**caractérisé par le fait**
**que** le capteur angulaire est conçu et disposé de façon telle qu'il existe une relation linéaire entre la localisation de l'élément de retenue, le long de la course de déplacement, et la position angulaire dudit capteur angulaire.

7. Dispositif de maintien (1) selon l'une des revendications précédentes,
**caractérisé par le fait**
**que** la course de déplacement mesure au moins 50 cm, de préférence au moins 70 cm ; et/ou par le fait que ladite course de déplacement se situe dans la plage de 30 cm à 200 cm, préférentiellement de 40 cm à 150 cm.

8. Dispositif de maintien (1) selon l'une des revendications précédentes,
**caractérisé par le fait**
**que** l'élément de support (2) comprend un support de montage (2a) dédié à l'implantation sur le véhicule (4), et un élément (2b) formant mât et agencé à pivotement sur ledit support (2a) de montage sur ledit véhicule, l'élément de retenue (3) étant agencé avec faculté de déplacement sur ledit élément (2b) formant mât ; et par le fait que ledit élément de support (2) est doté d'un capteur d'angles de mât, conçu pour détecter un angle de pivotement entre ledit support (2a) de montage sur le véhicule, et ledit élément (2b) formant mât.

9. Procédé de commande d'un dispositif de maintien (1) dévolu à une machine (5) de traitement de plantes, comprenant un élément de support (2) dédié à la fixation dudit dispositif de maintien (1) à un véhicule (4), et un élément de retenue (3) pouvant être déplacé par rapport audit élément de support (2), en vue de positionner la machine (5) sur ledit élément de retenue (3),
**caractérisé par le fait**
**que** le dispositif de maintien (1) est commandé en fonction de signaux de mesure d'un détecteur de courses, sachant que ledit détecteur de courses comporte au moins des premier et second bras (6a, 6b) et un capteur angulaire (7), que le premier bras (6a) est agencé sur ledit élément de support (2) avec faculté de pivotement au moins indirect, et que le second bras (6b) est agencé sur ledit premier bras (6a) avec faculté de pivotement au moins indirect, et sur ledit élément de retenue (3) avec faculté de pivotement au moins indirect ; et
**qu'**au moins une variation angulaire entre les deux bras (6a, 6b), entre le premier bras (6a) et l'élément de retenue (3), et/ou entre le second bras (6b) et ledit élément de retenue (3), est détectée au moins indirectement au moyen dudit capteur angulaire (7).
